# DEMANDE DE BREVET EUROPEEN

(11) **EP 1 405 788 A1**
(43) Date de publication de la demande: **07.04.2004**
(21) Numéro de dépôt: 03292380.7
(22) Date de dépôt: 29.09.2003
(51) Int. Cl.: B64D 1/22, B66C 23/18

(54) **Potence pour aéronef**

(30) Priorité: 04.10.2002 FR 0212367
(71) Demandeur: Daouk, Antar, F-75016 Paris (FR)
(72) Inventeur: Daouk, Antar, F-75016 Paris (FR)

(57) **Abrégé**

Potence pour aéronef, amovible articulée et orientable dans plusieurs plans, caractérisée en ce qu'elle se compose d'un socle (1) fixé aux armatures de l'aéronef comprenant une platine rotative (5) sur laquelle est fixée une plaque arrière (10) pivotant autour d'un axe amovible (9) comprenant des manchons intérieurs et extérieurs destinés à recevoir des tubes creux (11, 11', 11",11'''), en matériau rigide la reliant à une plaque avant (12) au travers d'une plaque intermédiaire (19) , la rigidité de l'ensemble est assurée par des câbles qui, associés à des systèmes de tension, passent dans les tubes (11, 11', 11",11''') et permettent de recevoir un dispositif de suspension ou de levage.

## Description

La présente invention concerne une potence pouvant être amovible, articulée et orientable dans divers plans, permettant d'accrocher à son extrémité un système de descente rapide à partir de l'aéronef vers le sol ou un système de levage du sol vers l'aéronef

En effet, à partir d'un aéronef en vol, pouvant être un hélicoptère, il est parfois nécessaire de faire descendre des personnes devant accéder à des zones d'intervention. Les potences existantes à ce jour sont normalement constituées d'un tube métallique fixe, munies d'un treuil électrique. De telles potences sont lourdes et ne sont pas d'un maniement aisé parce qu'elles sont fixes ; leur éventuelle articulation est électrique et complexe de mise en oeuvre.

La présente invention a pour but principal de remédier à ces inconvénients.

Pour ce faire, elle a pour objet une potence qui se caractérise essentiellement en ce qu'elle se compose de un ou plusieurs tubes rigides pouvant être en matériau composite, disposés de préférence de manière convergente de sorte à reprendre les contraintes de charge à leur extrémité, reliant une ou plusieurs plaques en matériau rigide. Une des plaques sert à recevoir le dispositif de descente ou de levage, l'autre plaque est fixée sur un socle au moyen d'une liaison pouvant servir d'articulation et permettant dans ce cas de faire pivoter la potence dans le plan horizontal avec une ou plusieurs positions fixes et dans le plan vertical selon un système pouvant être rotatif fixé sur le socle. Le socle constituant la partie fixe et supportant la potence est relié à des armatures existantes sur l'aéronef. L'ensemble des tubes et plaques constituant la partie mobile peut avoir une inclinaison orientable.

L'assemblage des tubes sur les plaques, conçu notamment dans le but de limiter le poids et la fragilisation des éléments en matériau composite par exemple, se fait par mise en place, à l'intérieur des tubes, d'un système tenseur pouvant être une liaison réglable en longueur à une de ses extrémités au moins. De plus, ce système tenseur pouvant être utilisé aussi comme support de moyen de contrôle ou moyen de contrôle de l'effort appliqué sur la potence.

Les plaques recevant les tubes peuvent être dotées de manchons d'assemblage intérieurs et extérieurs par exemple.

La potence, selon l'invention, peut, dans l'un quelconque des plans, être rapidement déployée manuellement à la position souhaitée et verrouillée par exemple par un système de gâche, agissant sur un guide fixé sur la plaque articulée sur le socle, et peut être inclinée manuellement dans l'autre plan selon un mouvement pouvant être rotatif d'une partie du socle et verrouillée par un système de gâche à la position souhaitée.

La plaque avant, le socle et les tubes sont disposés de préférence de façon à pouvoir être utilisés indifféremment en partie gauche ou droite de l'aéronef

Dans une forme de réalisation particulière de l'invention, il est possible de rajouter, dans le cas où les tubes sont convergents, une ou plusieurs plaques intermédiaires munies d'un ou plusieurs guides reprenant la forme des tubes et qui, positionnées en un endroit déterminé, permet de rajouter un élément de suspension de charge supplémentaire.

Ces plaques intermédiaires sont dotées de manchons pouvant être orientés de manière appropriée dans lesquels coulissent le ou les tubes de la potence. Dans le cas où les tubes sont convergents, les manchons ayant les mêmes orientations que les tubes, sont de ce fait autobloquants dans la position dans laquelle ils ont été conçus.

Grâce aux dispositions susmentionnées, il est possible, manuellement, de déverrouiller la potence, de la faire pivoter dans la position souhaitée et de la verrouiller.

Il est de même possible d'installer un système de levage indifféremment sur la plaque avant, la ou les plaques intermédiaires ou sur la plaque arrière.

Avantageusement, les plaques ainsi que le socle peuvent être réalisés en matériaux résistants à l'oxydation et a-magnétiques, par exemple l'acier inoxydable ou le titane, tandis que les tubes peuvent être réalisés en matériau composite.

Dans une forme de réalisation particulière de l'invention, la partie mobile est constituée de plaques et de tubes dont l'assemblage consiste notamment en un câble, passant dans les tubes, doté d'une boucle à chaque extrémité reliée à un système de vis permettant de régler la tension du câble. Ce système léger rend la potence résistante.

Dans une forme complémentaire de réalisation de l'invention, les plaques sont dotées d'un double manchon bloquant le tube composite à l'intérieur et à l'extérieur.

Ce système apporte une plus grande résistance à la rupture.

En outre, la potence est dotée :
- d'un axe reliant la partie mobile au socle. Cet axe peut être amovible afin de permettre la séparation de la partie fixe et de la partie mobile.
- d'un guide pouvant être fixé sur la partie mobile et répondant à la cinématique de rotation. Il peut avoir une forme particulière pour augmenter la surface de contact et de ce fait avoir une plus grande rigidité. Ce guide peut servir de gâche à un pêne pouvant être logé dans le socle, actionné par un câble et ramené en position par un ressort.
- D'une platine rotative fixée sur le socle permettant à la partie mobile de prendre une inclinaison et d'être verrouillée par un pêne logé dans l'épaisseur du socle, le socle servant de gâche.

Dans une autre réalisation particulière de l'invention, il est possible d'installer par exemple des crochets de largage au moyen de câbles actionnés depuis le socle.

En pratique, la potence est constituée d'un socle et de 4 tubes convergents passant au travers de plaques destinées à recevoir un dispositif de descente ou de levage.

Une forme d'exécution de l'invention est décrite ci-après à titre d'exemple, en référence aux dessins annexés dans lesquels :
- La figure 1 est une vue en perspective d'une réalisation de la potence.
- La figure 2 est une vue de détail montrant une forme d'articulation dans un plan de la potence.
- La figure 3 est une vue de détail montrant un système de verrouillage possible.
- La figure 4 est une vue en coupe du système de tension du câble à l'intérieur d'un tube.

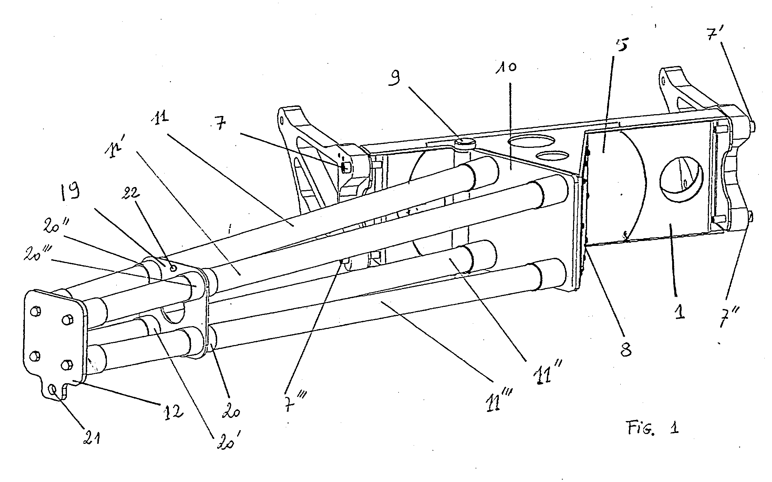

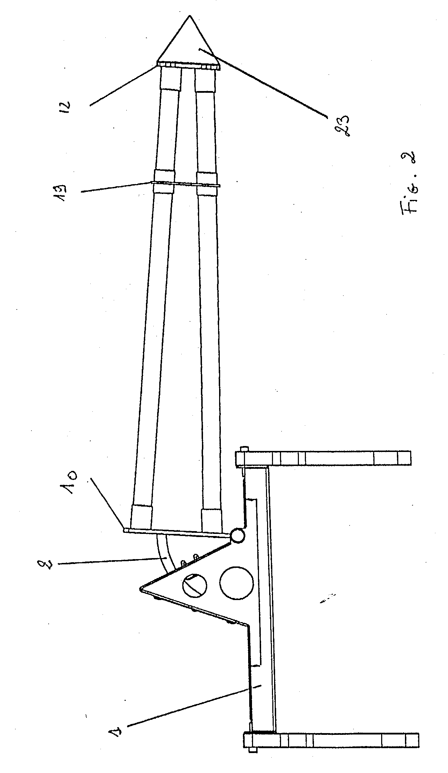

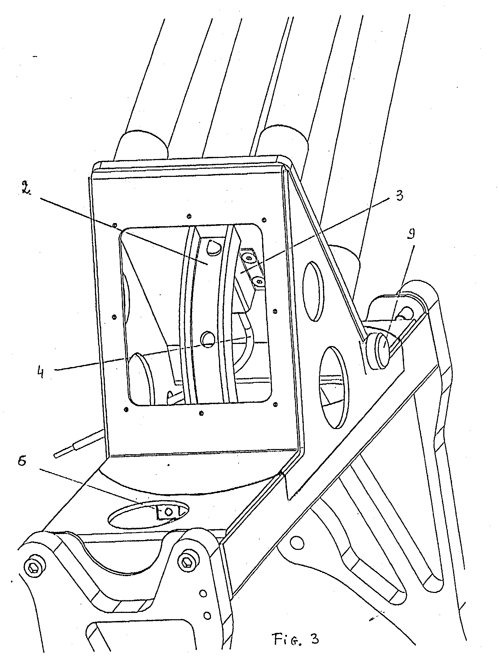

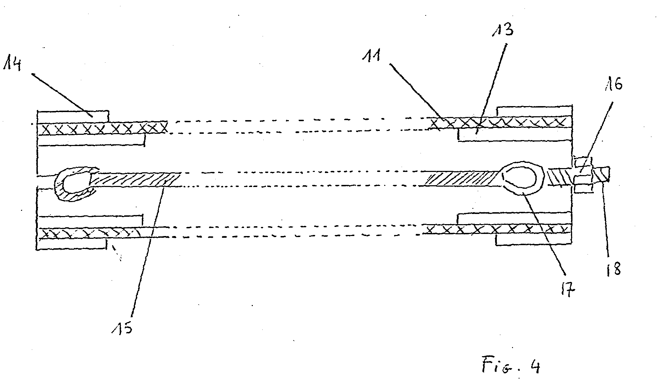

La potence représentée dans les figures 1, 2, 3 et 4 se compose essentiellement :
- d'un socle 1 doté d'un système de verrouillage composé d'un guide 2 servant de gâche à un pêne 3 et d'une commande de gâche 4, d'une platine rotative 5 bloquée en position par un pêne 6, de quatre broches à billes amovibles 7, 7', 7", 7"'; d'une trappe de visite 8,
- Un axe de liaison amovible 9,
- Une plaque arrière 10,
- 4 tubes 11, 11', 11 ", 11'" dans lesquels passent les câbles réglables en tension 15,
- Une plaque avant 12,
- Une plaque intermédiaire 19,
- Un déflecteur d'air aérodynamique 23.

Conformément à l'invention et comme représenté plus en détail sur les figures 1 et 3, l'équipement est fixé aux armatures de l'aéronef au moyen de quatre broches à billes 7, 7', 7", 7"', permettant son installation et son démontage rapide. Le système de verrouillage permettant de verrouiller en position souhaitée la partie mobile sur le socle est doté d'un guide 2 servant de gâche à un pêne 3 logé dans le socle 1. Une platine rotative 5 est bloquée en position grâce à un pêne 6 logé dans le socle 1. Une trappe de visite 8 permet la maintenance du mécanisme de verrouillage.

Selon l'invention, un axe de liaison amovible 9 assure l'articulation de la partie mobile sur le socle 1.

En outre comme représenté sur la figure 3, une commande de gâche 4 permet de faire pivoter la partie mobile de la potence dans le plan horizontal et un pêne 6 permet d'incliner la potence dans le plan vertical.

Les plaques arrière 10 et avant 12 sont dotées de lumières afin de recevoir des crochets largables destinés à recevoir la charge.

Comme on peut le voir clairement sur les figures 1 et 4, les quatre tubes 11, 11', 11, 11" sont convergents et s'emboîtent, au niveau des plaques avant 12 et arrière 10, dans des manchons d'assemblage intérieurs 13 et extérieurs 14 et dans lesquels passent des câbles réglables en tension 15 reliés à un système de tension 16. Les câbles 15 sont dotés d'une boucle 17 à chaque extrémité reliée à un système de vis 18 permettant de régler la tension des câbles.

L'ensemble constitué par les plaques, les platines, les tubes, les câbles et les systèmes de tension, a pour fonction de supporter la charge sous les crochets largables.

La plaque intermédiaire 19 représentée figure 1 est munie de manchons 20, 20', 20", 20"', ayant les mêmes orientation que les tubes et sont de ce fait autobloquants dans la position dans laquelle ils ont été conçus.

La plaque avant 12 et la plaque intermédiaire 19 représentées sur la figure 1 sont dotées de lumières 21 et 22 dans lesquelles prennent place des crochets largables destinés à recevoir le dispositif de descente ou de levage.

Le déflecteur d'air 23 représenté sur la figure 2 est aérodynamique

## Revendications

1. Potence pour aéronef, amovible, articulée et orientable dans plusieurs plans, **caractérisée en ce qu'**elle se compose d'un socle (1) fixé aux armatures de l'aéronef comprenant une platine rotative (5) sur laquelle est fixée une plaque arrière (10) pivotant autour d'un axe amovible (9) comprenant des manchons intérieurs (13) et extérieurs (14) destinés à recevoir des tubes creux (11, 11', 11", 11"'), en matériau rigide la reliant à une plaque avant (12) au travers d'une plaque intermédiaire (19) , la rigidité de l'ensemble est assurée par des câbles (15) qui, associés à des systèmes de tension (16), passent dans les tubes (11, 11', 11", 11"') et permettent de recevoir un dispositif de suspension ou de levage.

2. Potence selon la revendication 1 **caractérisée en ce que** la rigidité de l'ensemble constitué par les plaques (10, 12, 19) et les tubes (11, 11', 11", 11"') est assurée par les de câbles (15) à tension réglable.

3. Potence selon la revendication 1 ou 2 **caractérisée en ce que** l'axe de liaison (9) est amovible pour permettre une séparation du socle (1) constituant la partie fixe des autres éléments constituant la partie mobile.

4. Potence selon l'une quelconque des revendications 1 à 3 **caractérisée en ce que** les tubes (11, 11', 11", 11"') reliant la plaque arrière (10) à la plaque avant (12) sont convergents.

5. Potence selon l'une quelconque des revendications 1 à 4 **caractérisée en ce que** le socle 1 est doté d'un guide de forme étudiée pour une bonne rigidité (2) servant de gâche à un pêne (3) permettant le verrouillage en position souhaitée.

6. Potence selon l'une quelconque des revendications 1 à 5 **caractérisée en ce que** le socle 1 comprend une platine rotative (5) verrouillable en position souhaitée au moyen d'un pêne (6).

7. Potence selon l'une quelconque des revendications 1 à 6 **caractérisée en ce que** la plaque intermédiaire (19) est dotée de manchons (20, 20', 20", 20"') orientés selon la convergence des tubes (11, 11', 11", 11"') est autobloquante dans la position dans laquelle les manchons ont été orientés.

8. Potence selon l'une quelconque des revendications 1 à 7 **caractérisée en ce que** le manchonnage des tubes est assuré par la mise en place de manchons d'assemblage intérieurs (13) et extérieurs (14).

9. Potence selon l'une quelconque des revendications 1 à 8 **caractérisée en ce que** les plaques (12, 19) sont dotées de lumières (21, 22) pouvant recevoir des dispositifs d'accrochage.

10. . Potence selon l'une quelconque des revendication 1 à 9 **caractérisée en ce que** les câbles peuvent être utilisés comme support de moyen de contrôle ou moyen de contrôle de l'effort appliqué sur la potence.

11. Potence selon l'une quelconque des revendications 1 à 10 **caractérisée en ce qu'**elle peut s'installer à droite ou à gauche de l'aéronef.

12. Potence selon l'une quelconque des revendications 1 à 11 **caractérisée en ce que** les orientations et les commandes sont manuelles.

13. Potence selon l'une quelconque des revendications 1 à 12 **caractérisée en ce qu'**elle est dotée d'un déflecteur d'air (23) aérodynamique.

14. Potence selon l'une quelconque des revendications 1 à 13 **caractérisée en ce que** les tubes (11, 11', 11", 11"') sont réalisés en matériau composite.

15. Potence selon l'une quelconque des revendications 1 à 14 **caractérisée en ce que** les pièces sont réalisés en matériaux résistants à la corrosion.

16. Potence selon l'une quelconque des revendications 1 à 15 **caractérisée en ce qu'**elle est réalisée en matériaux a-magnétiques.

17. Potence selon l'une quelconque des revendications 1 à 16 **caractérisée en ce que** les commandes de verrouillage sont déportées

18. Potence selon l'une quelconque des revendications 1 à 17 **caractérisée en ce qu'**elle est dotée d'une trappe de visite.
